Europäisches Patentamt

European Patent Office

Office européen des brevets

(19)

(11) Numéro de publication : **0 148 480**
**B1**

(12) **FASCICULE DE BREVET EUROPÉEN**

(45) Date de publication du fascicule du brevet :
**20.01.88**

(51) Int. Cl.⁴ : **F 16 K 31/365**, F 16 K 31/126,
F 16 K 51/02

(21) Numéro de dépôt : **84115990.8**

(22) Date de dépôt : **20.12.84**

(54) Vanne dont l'ouverture fonctionne a la depression.

(30) Priorité : **22.12.83 FR 8320576**

(43) Date de publication de la demande :
**17.07.85 Bulletin 85/29**

(45) Mention de la délivrance du brevet :
**20.01.88 Bulletin 88/03**

(84) Etats contractants désignés :
**AT BE CH DE FR GB IT LI NL**

(56) Documents cités :
**FR-A-   993 031**
**FR-A- 2 343 184**
**GB-A- 1 275 914**
**US-A- 1 955 685**
**US-A- 3 459 403**
**US-A- 4 070 001**

(73) Titulaire : **ALCATEL CIT**
**33, rue Emeriau**
**F-75015 Paris (FR)**

(72) Inventeur : **Paquet, Jean-Marc**
**1, rue des Anémones**
**F-74000 Annecy (FR)**
Inventeur : **Sibuet, René**
**55, avenue de la Mavéria**
**F-74000 Annecy (FR)**

(74) Mandataire : **Weinmiller, Jürgen et al**
**Lennéstrasse 9 Postfach 24**
**D-8133 Feldafing (DE)**

Jouve, 18, rue St-Denis, 75001 Paris, France

## Description

La présente invention concerne une vanne à dépression pour isoler une enceinte sous vide d'une pompe à vide.

Pour obtenir une étanchéité convenable dans une vanne, la pression à appliquer sur le siège du clapet de la vanne doit être importante, il en résulte la nécessité d'une source de puissance élevée pour la manœuvre de l'élément mobile de la vanne.

On connaît, par exemple, une vanne à dépression comprenant essentiellement un corps creux divisé en une première partie et en une seconde partie par une paroi interne, la première partie étant munie d'une première ouverture, destinée à être reliée à une enceinte à vider, et d'une seconde ouverture, destinée à être reliée à l'aspiration d'une pompe à vide, un clapet mobile, poussé par un ressort et permettant d'obturer la première ouverture, étant disposé dans ladite première partie et comportant une queue traversant ladite cloison interne, ladite queue étant reliée à un piston séparant ladite seconde partie en deux chambres dont l'une, celle située du côté de ladite queue, communique avec l'extérieur et dont l'autre est reliée à une pompe à vide auxiliaire pour l'ouverture de la vanne. Le piston assure l'étanchéité entre les deux chambres.

Cette vanne connue nécessite, pour son ouverture, une pompe à vide auxiliaire, telle qu'une pompe à membrane, par exemple, avec son moteur d'entraînement pour compenser l'effort du ressort qui peut être important.

Ainsi, cette vanne nécessite un équipement auxiliaire encombrant dont le volume peut être deux à trois fois le volume de la vanne elle-même

La présente invention a pour but de pallier cet inconvénient et à proposer une vanne fonctionnant à la dépression et ne nécessitant pas un équipement auxiliaire encombrant.

La présente invention a donc pour objet une vanne dont l'ouverture fonctionne à la dépression, comprenant un corps creux divisé en une première partie et en une seconde partie par une paroi interne, la première partie étant munie d'une première ouverture destinée à être reliée à une enceinte à vider, et d'une seconde ouverture destinée à être reliée à l'aspiration d'une pompe à vide, un clapet mobile, poussé par un ressort et permettant d'obturer ladite première ouverture, étant disposé dans ladite première partie, ledit clapet comportant une queue traversant ladite paroi et étant reliée à un piston séparant ladite seconde partie en deux chambres, ledit piston assurant l'étanchéité entre les deux chambres dont l'une, celle située du côté de ladite queue et appelée première chambre, communique avec l'extérieur, caractérisée en ce que l'autre chambre, appelée seconde chambre, comporte un orifice de communication avec l'extérieur muni de moyens d'obturation et en ce qu'un conduit de communication est établi entre ladite première partie du corps et ladite seconde chambre.

Ainsi, grâce à l'invention, la puissance nécessaire pour l'ouverture de la vanne, pour vaincre la force du ressort est fournie par la pompe à vide elle-même ; il est seulement nécessaire pour commander l'ouverture de la vanne, d'obturer l'orifice de communication de la seconde chambre avec l'extérieur, ce qui ne requiert qu'une puissance limitée. On utilise par exemple une électrovanne dont les dimensions sont très inférieures à celles de la vanne elle-même. Cette électrovanne est commandée lors de la mise en route de la pompe à vide.

Selon une réalisation préférée de l'invention, ledit conduit de communication entre la première partie du corps et la seconde chambre est réalisé par un canal pratiqué dans ladite queue et débouchant à l'extérieur du piston dans ladite seconde chambre.

Selon une autre caractéristique préférée, en position d'ouverture de la vanne, la surface de débouché dudit canal dans ladite seconde chambre s'applique contre un joint circulaire obturant ladite communication.

Cette mesure permet d'éviter à l'électrovanne d'avoir à subir une trop grande différence de pression entre l'atmosphère et la pression régnant dans ladite seconde chambre. Ainsi, dès que la vanne est ouverte, le pompage dans cette seconde chambre est arrêté. Cela permet de limiter la puissance et donc l'encombrement de l'électrovanne.

On va maintenant décrire un exemple de réalisation de l'invention en référence au dessin annexé dans lequel :

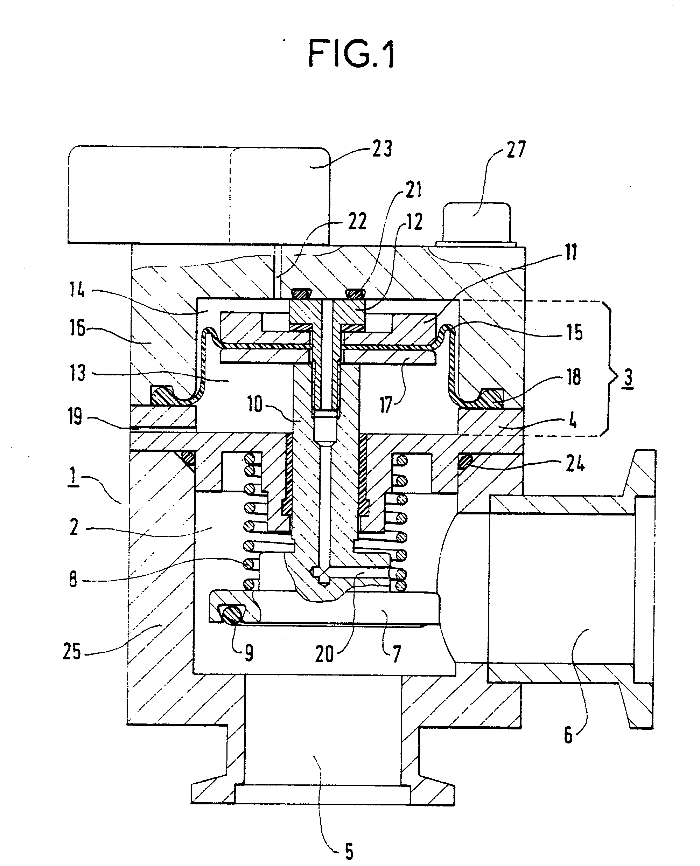

La figure 1 montre en coupe axiale une vanne selon l'invention dans laquelle on a représenté le clapet en position ouverte.

La figure 2 montre la même vanne en position fermée.

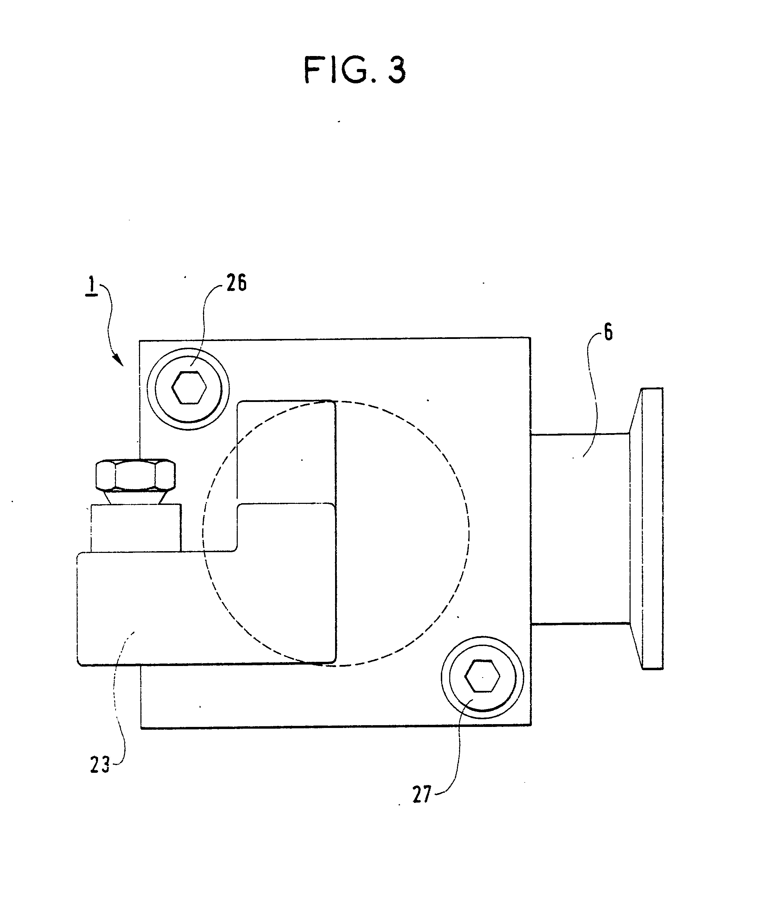

La figure 3 montre la même vanne en vue de dessus.

La vanne selon l'invention comprend un corps creux 1 divisé en deux parties 2 et 3 par une paroi interne 4.

La première partie 2 est munie d'une première ouverture 5 destinée à être reliée à une enceinte dans laquelle on veut faire le vide, et d'une deuxième ouverture 6 destinée à être raccordée à l'aspiration d'une pompe à vide.

Un clapet mobile 7 est disposé à l'intérieur de cette première partie 2 et il est soumis à l'action d'un ressort 8.

Lorsque la vanne est fermée, ce clapet 7 obture l'ouverture 5. Un joint 9 assure l'étanchéité de l'obturation.

Le clapet 7 est muni d'une queue 10 qui traverse d'une manière étanche la paroi interne 4 qui joue le rôle de palier pour le coulissement axial du clapet 7.

Dans la seconde partie 3 est situé un piston 11 lié à la queue par une vis 12.

Ce piston 11 sépare la seconde partie 3 en une première chambre 13 et en une seconde chambre 14. l'étanchéité entre les deux chambres est assurée par une membrane à déroulement 15 en élastomère serrée sur sa périphérie extérieure entre la paroi 4 et le couvercle 16 du corps et sur sa périphérie intérieure, entre le piston 11 et une rondelle 17.

La membrane à déroulement comporte sur son pourtour extérieur un joint 18 assurant l'étanchéité entre l'extérieur et la partie interne 3.

La première chambre 13 est mise en communication avec l'extérieur par un orifice 19.

La première partie 2 du corps est mise en communication avec la seconde chambre 14 de la deuxième partie 3 du corps par le moyen d'un canal 20.

Ce canal comporte une partie horizontale, pénétrant radialement dans la partie supérieure du clapet 7 jusqu'à son axe, et une partie verticale axiale depuis cette première partie jusqu'au débouché dans la seconde chambre 14. La surface de débouché du canal 20 étant constituée par la surface de la tête de la vis 12 qui, en position ouverte de la vanne, s'applique contre un joint 21 obturant la communication entre la seconde chambre 14 et la première partie 2 du corps. La seconde chambre 14 comporte en outre une communication avec l'extérieur réalisée par un canal 22 pratiqué dans le couvercle 16 du corps 1. Ce canal 22 est muni de moyens d'obturation, en l'occurence une électrovanne 23.

Cette électrovanne 23 est alimentée lors de la mise en route de la pompe à vide reliée à l'ouverture 6 et cette alimentation a pour effet d'obturer le canal 22.

Un joint torique 24 est interposé entre la paroi 4 et la partie inférieure 25 du corps 1 pour assurer l'étanchéité entre l'extérieur et la première partie 2 du corps 1.

Des vis 26 et 27 réalisent l'assemblage et le serrage de l'ensemble.

Le fonctionnement est le suivant :

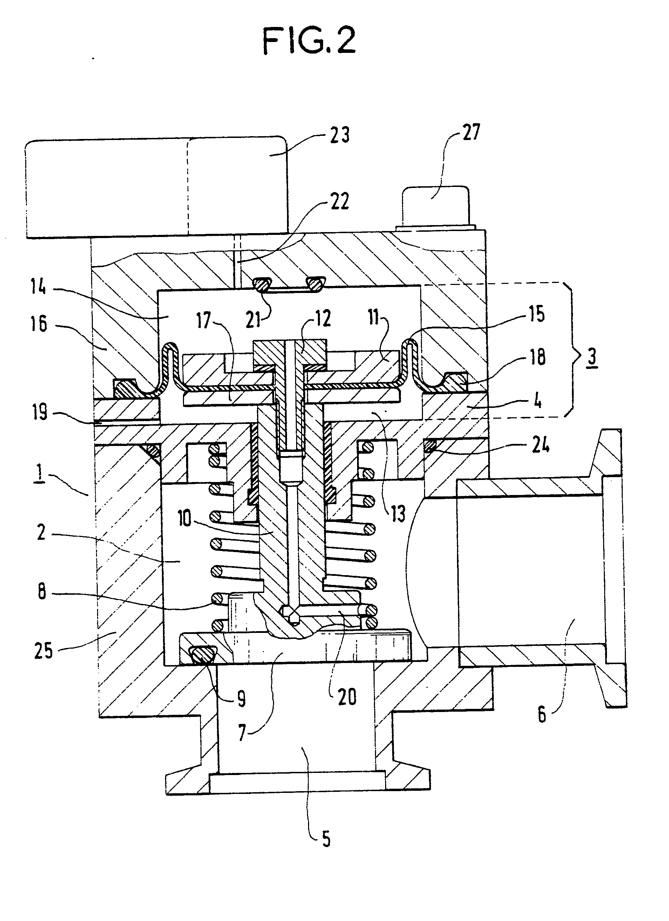

En position fermée, figure 2, le clapet 7 est en appui sur son siège, obturant l'ouverture 5. Le canal 20 assure la communication entre la seconde chambre 14 et la première partie 2. Ces deux cavités sont à la pression atmosphérique grâce au canal 22 qui est ouvert, l'électrovanne 23 n'étant pas alimentée. En outre, la première chambre 13 est également à la pression atmosphérique par l'orifice 19. Le ressort 8 applique le clapet sur son siège.

Lors de la mise en route de la pompe à vide reliée à l'ouverture 6, on alimente l'électrovanne 23 ce qui a pour effet d'obturer le canal 22. Au cours du fonctionnement de la pompe, la seconde chambre 14 se vide donc à travers le canal 20. Lorsque la différence de pression s'exerçant sur les deux faces du piston 11, due au fait que la première chambre 13 est toujours à la pression atmosphérique, exerce sur celui-ci une force vers le haut, suffisante pour vaincre la résistance du ressort 8, le clapet 7 s'ouvre et lorsqu'il a atteint sa position haute, la tête de vis 12 vient porter sur le joint 21 obturant le canal 20 de communication entre la seconde chambre 14 et la première partie 2 du corps 1. Cette obturation du canal 20 n'est pas indispensable, mais elle permet, alors que le clapet est déjà ouvert, d'éviter une trop grande baisse de pression dans la seconde chambre 14 nécessitant alors une électrovanne capable de supporter la différence de pression entre l'atmosphère et cette pression. Grâce à cette mesure, la différence de pression supportée par l'électrovanne 23 est plus faible et permet ainsi de choisir une électrovanne peu puissante et peu encombrante.

La fermeture de la vanne est réalisée par l'interruption de l'alimentation de l'électrovanne 23 ce qui entraîne l'ouverture du canal 22 et la mise à l'atmosphère de la seconde chambre 14.

La différence de pression entre les première et seconde chambres 13 et 14 est nulle et le ressort 8 déplace alors le clapet vers le bas isolant l'ouverture 5.

Une telle vanne convient particulièrement bien pour isoler une enceinte à vider, d'une pompe à vide primaire telle que par exemple une pompe à palettes. Le canal 20 qui remet, à l'arrêt de la pompe, la vanne étant fermée, la partie fonctionnelle de la pompe à vide à la pression atmosphérique, permet de remédier à certains incidents liés au fonctionnement de ce type de pompes.

Ainsi seule une petite électrovanne est nécessaire par le fonctionnement à l'ouverture de la vanne.

Une électrovanne de 11 watts est suffisante lorsque la vanne est associée à une pompe à vide primaire.

On peut aussi utiliser une telle vanne en association avec une pompe a vide secondaire malgré le canal 20 qui, au moment de la fermeture de la vanne et avant que le clapet 7 n'ait atteint son siège, réalise une communication entre l'atmosphère et la seconde partie 3, à condition que le ressort 8 ait une plus grande raideur de manière à réduire le temps de fermeture, que la section du canal 20 soit suffisamment faible et que l'enceinte à vider soit de dimension suffisamment importante.

**Revendications**

1. Vanne dont l'ouverture fonctionne à la dépression, comprenant un corps creux (1) divisé en une première partie (2) et en une seconde partie (3) par une paroi interne (4), la première partie étant munie d'une première ouverture (5) destinée à être reliée à une enceinte à vider, et d'une seconde ouverture (6) destinée à être reliée à l'aspiration d'une pompe a vide, un clapet mobile (7), poussé par un ressort (8) et permettant d'obturer ladite première ouverture, étant disposé dans ladite première partie, ledit clapet comportant une queue (10) traversant ladite paroi interne et étant reliée à un piston (11) séparant ladite seconde partie en deux chambres (13, 14), ledit piston assurant l'étanchéité entre les deux chambres dont l'une (13), celle située du côté de ladite queue et appelée première chambre, communique avec l'extérieur, caractérisée en ce que l'autre chambre (14), appelée seconde chambre, comporte un orifice (22) de communication avec l'extérieur muni de moyens (23) d'obturation et en ce qu'un conduit de communication (20) est établi entre ladite première partie (2) du corps et ladite seconde chambre (14).

2. Vanne selon la revendication 1, caractérisée en ce que ledit conduit de communication (20) entre la première partie (2) du corps et la seconde chambre (14) est réalisé par un canal (20) pratiqué dans ladite queue et débouchant à l'extérieur du piston dans ladite seconde chambre.

3. Vanne selon la revendication 2, caractérisée en ce que, en position d'ouverture de la vanne, la surface de débouché dudit canal (20) dans ladite seconde chambre (14) s'applique contre un joint circulaire (21) obturant ladite communication.

4. Vanne selon l'une des revendications précédentes, caractérisée en ce que les moyens d'obturation de l'orifice de communication de la seconde chambre avec l'extérieur comportent une électrovanne (23) qui est alimentée lors de la mise en route de ladite pompe à vide.

**Claims**

1. A valve which opens on reduced pressure and which comprises : a hollow body (1) divided into a first (2) and a second portion (3) by an internal partition (4), with the first portion being provided with a first opening (5) for connection to an enclosure to be evacuated and with a second opening (6) for connection to the suction side of a vacuum pump ; a moving valve plate (7) disposed inside the first portion ; a spring (8) urging the valve plate to close the first opening ; a rod (10) having one end connected to the valve plate and passing through the internal partition ; and a piston (11) which is connected to the other end of the rod, and which divides the second portion into a first chamber (13) and a second chamber (14), the piston sealing the two chambers from each other, the first chamber being on the rod side of the piston and being in communication with the outside, characterized in that the other chamber called second chamber (14) includes an orifice (22) for communication with the outside, which orifice is fitted with closure means (23), and that a communication duct (20) is provided between said first portion (2) of the body and said second chamber (14).

2. A valve according to claim 1, characterized in that said communication duct (20) between the first portion (2) of the body and the second chamber (14) is made of a channel (20) provided in said rod and opening out beyond said piston into the second chamber.

3. A valve according to claim 2, characterized in that, when the valve is open, said point at which the channel (20) opens out into the second chamber (14) is closed by abutment against circular sealing means (21).

4. A valve according to any one of the preceding claims, characterized in that the means for closing the orifice providing communication between the second chamber and the outside comprise an electrically-actuated valve (23) which is powered when said vacuum pump is powered.

**Patentansprüche**

1. Ventil, dessen Öffnung bei Unterdruck erfolgt, mit einem Hohlkörper (1), der durch eine Innenwand (4) in einen ersten Teil (2) und einen zweiten Teil (3) aufgeteilt ist, wobei der erste Teil eine erste Öffnung (5) zum Anschluß an einen zu evakuierenden Behälter und eine zweite Öffnung (6) zum Anschluß an die Saugseite einer Vakuumpumpe besitzt und wobei ein bewegliches Ventilglied (7), das dem Druck einer Feder (8) unterliegt und die erste Öffnung zu verschließen vermag, in dem ersten Teil sitzt und einen durch die Innenwand dringenden Arm (10) aufweist, der mit einem den zweiten Teil in zwei Kammern (13, 14) trennenden Kolben (11) verbunden ist, der die Dichtheit zwischen den beiden Kammern herstellt, wobei die eine der Kammern (13), die auf der Seite des Arms liegt und erste Kammer genannt wird, mit der Außenwelt in Verbindung steht, dadurch gekennzeichnet, daß die andere Kammer (14), zweite Kammer genannt, eine Verbindungsöffnung (22) mit der Außenwelt besitzt, die mit Verschlußmitteln (23) versehen ist, und daß eine Verbindungsleitung (20) zwischen dem ersten Teil (2) des Körpers und der zweiten Kammer (14) ausgebildet ist.

2. Ventil nach Anspruch 1, dadurch gekennzeichnet, daß die Verbindungsleitung (20) zwischen dem ersten Teil (2) des Körpers und der zweiten Kammer (14) von einem Kanal (20) gebildet wird, der in dem Arm verläuft und in die zweite Kammer mündet.

3. Ventil nach Anspruch 2, dadurch gekennzeichnet, daß in Öffnungsstellung des Ventils die Mündungsfläche des Kanals (20) in die zweite Kammer (14) gegen eine Ringdichtung (21) anliegt, die diese Leitung verschließt.

4. Ventil nach einem der vorhergehenden Ansprüche, dadurch gekennzeichnet, daß die Mittel zum Verschluß der Öffnung der zweiten Kammer nach der Außenwelt ein Elektroventil (23) aufweisen, das erregt wird, wenn die Vakuumpumpe eingeschaltet wird.

# FIG.1

# FIG.2

# FIG. 3